# EUROPEAN PATENT APPLICATION

(11) **EP 3 412 797 A1**
(43) Date of publication of application: **12.12.2018**
(21) Application number: 17305663.1
(22) Date of filing: 06.06.2017
(51) Int. Cl.: C25D 1/00, C25D 1/04, C25D 5/18, C25D 21/12, H01M 4/04, H01M 4/38, H01M 4/66, H01M 4/46, H01G 9/00

(54) **PROCESS FOR THE PREPARATION OF A MAGNESIUM NANOSTRUCTURED MATERIAL**

(71) Applicant: Commissariat à l'Energie Atomique et aux Energies Alternatives, 75015 Paris (FR)
(72) Inventor: ARADILLA, David, 38250 St Nizier du Moucherotte (FR); RAMAN, Ravikumar, 38000 Grenoble (FR)
(74) Representative: Gevers & Orès

(57) **Abstract**

The present invention relates to a process for the preparation of a Mg nanostructured material, in particular Mg nanowires, to the materials obtainable by this process and to their use in particular in electrodes for lithium batteries, supercapacitors, hydrogen storage, electronic detectors of chemical or biological substances or anti-microbial textiles.

## Description

The present invention relates to a process for the preparation of a Mg nanostructured material, in particular Mg nanowires, to the materials obtainable by this process and to their use in particular in electrodes for lithium batteries, supercapacitors, hydrogen storage, electronic detectors of chemical or biological substances or anti-microbial textiles.

The rapid and growing evolution of consumer electronics in our society has triggered a great revolution in the field of energy storage due to their severe technical specifications in terms of high power and energy density as well as long lifespan. Accordingly, the need to find low-cost, safe and high-performance reliable solutions result critical to accomplish these commitments in the next coming years. In this regard, lithium-ion batteries (LiBs) based on nanostructured material anodes, such as nanowires, have emerged as promising anodes compared to graphite, employed commonly in commercial lithium-ion batteries. More specifically, tremendous efforts have currently been addressed to the domain of silicon nanowires (SiNWs) owing to its high theoretical charge capacity (4200 mAh g). However, in spite of the important advances carried out in SiNW-based lithium-ion batteries, an important drawback associated to their poor cycling performances limit nowadays their potential use in commercial applications, consequently exhaustive and deep studies are still required. Within this context, other interesting metal nanowires have attracted a great deal of attention as promising anode materials, such as Sn, Sb, A1 or Mg. In particular, Mg presents a high theoretical specific capacity (3350 mAh g⁻¹) and charge density (4355 mAh cm⁻³), which make him an excellent and promising candidate as anode for lithium-ion batteries.

Over the past years, several works have been reported dealing with the electrochemical synthesis of metal nanowires, which provides an interesting approach due to its versatility, easy procedure, and synthesis at room temperature compared to other conventional techniques based on chemical vapor deposition or chemical etching. In this direction, for example, Sn, Sb or Al nanowires were conducted by means of a 3-electrode cell configuration using ionic liquid electrolytes in different substrates (or templates) at room temperature.

Concerning Mg, electrochemically Mg nanowires have been synthesized using galvanostatic methods (constant current density of 5 mA cm⁻²) in a 2-electrode cell configuration constituted from a Pt cathode and a Mg anode (Chem. Commun. 2012, 48, 5169). However, the obtained coatings are not satisfactory in terms of density, uniformity, and adherence, which are critical in the above-mentioned applications.

There has now been developed a process for the synthesis of Mg nanostructured material, in particular Mg nanowires, based on two steps, a first step related to a potentiostatic method, and a second step related to a galvanostatic method.

Unexpectedly, it has been shown that this two steps method advantageously yields homogeneous and adherent coatings, with high densities of Mg nanostructured material, in particular Mg nanowires. This quality confers a very high specif surface to the material.

As another advantage, said two steps method enables the direct electrochemical synthesis of Mg nanostructured material, in particular Mg nanowires, on substrates of interest, for example copper substrates, which are commonly used as current collectors in lithium-ion batteries. This represents an important advantage because it is not necessary to prepare a slurry by dispersing an active material, a conductive agent and a polymeric binder in a solvent, as described for instance by Cho et al. (Materials Research Bulletin 2013, 48, 2922). Thereby, the preparation of an anode electrode can be carried out directly on a battery device.

In addition, the two steps method enables an easy control of the morphology of the Mg nanostructured material (shape, e.g. nanowires or nanoaggregates, density...), depending on the electrochemical conditions (e.g. current density, voltage, deposition time, concentration of electrolyte...).

Furthermore, the Mg nanostructured material, for example the Mg nanowires of the invention, advantageously make it possible to yield excellent electrochemical performance as battery anode, and in particular to obtain excellent capacity retention with excellent coulombic efficiency, in particular by virtue of their great density.

This Mg nanostructured material, in particular Mg nanowires, can be deposited in large quantities, by controlling electrochemical conditions through a safe and low synthesis cost by virtue of an easy synthesis method based on inexpensive reactants.

Thus, a first subject matter of the invention relates to a process for the preparation of a Mg nanostructured material, comprising the steps of:
i) submitting a conductive support to a potentiostatic step in presence of a Mg precursor and an electrolyte to obtain a deposit of Mg on said conductive support;
ii) submitting the Mg deposit on said conductive support obtained in step i) to a galvanostatic step in presence of the Mg precursor and the electrolyte, whereby the Mg nanostructured material deposited on said conductive support is obtained; and
iii) optionally, removing the conductive support and recovering the Mg nanostructured material obtained in step ii).

The conductive support is in particular a metal or alloy, more particularly a metal or alloy selected from the group constituted of Cu, steel, for example stainless steel, and Al.

The process of the invention enables the direct electrochemical synthesis of Mg nanostructured material, in particular Mg nanowires, on substrates of interest, which are for example commonly used as current collectors in lithium-ion batteries, with no need to transfer said Mg nanostructured material, in particular Mg nanowires.

Said conductive support, in particular the metal or alloy, may be in the form of a foil.

The electrolyte is in particular in solution in a polar organic solvent.

Said polar organic solvent is in particular chosen from the group consisting of THF, dichloromethane, diethylether, ethylacetate, dimethylsulfoxide or acetonitrile.

In a particular embodiment, the concentration of the electrolyte in the polar organic solvent is comprised from 0.0005 to 0.05M, more particularly from 0.001M to 0.01M, even more particularly of about 0.005M.

The electrolyte can in particular be chosen from perchlorate containing salts, hexafluorophosphate containing salts, borate containing salts, and their mixtures.

The electrolyte can more particularly be chosen from TBAPF₆, LiClO₄, and their mixtures.

The Mg precursor is preferably a Grignard reagent. The Grignard reagent may be chosen from alkyl, vinyl, and aryl-magnesium halides, in particular alkyl, vinyl, and aryl-magnesium iodides, bromides or chlorides, said Grignard reagent being more particularly PhMgBr.

### Stage i)

Stage i) consists in a potentiostatic step, and can be performed by any methods known for maintaining a constant electrode potential.

Without wishing to be bound by theory, it is believed that stage i) enables to nucleate the conductive support surface with magnesium.

The potentiostatic step is in particular based on chronoamperometry or chronocoulometry, more particularly on chronoamperometry at reduction potentials.

The potentiostatic step is preferably performed at a reduction potential of +0.5 to -1.5 V, in particular of -1.0 to -1.5 V, more particularly of about -1.24 V.

Stage i) is in particular performed for 1 to 10 seconds, in particular for 2 to 8 seconds, more particularly for about 5 seconds.

Stage i) is carried out in particular at a temperature of 15 to 30°C, in particular of about 20 or 25°C.

In a particular embodiment, step i) is performed in a 3 electrode cell configuration.

In a more particular embodiment, step ii) is performed in a cell comprising a working electrode, a counter electrode and a reference electrode, the conductive support being used as the working electrode.

For example, the counter electrode and a reference electrode comprise or consist of magnesium, in particular as a magnesium ribbon.

By way of example, the potential as defined above is applied between the working electrode and the reference electrode.

### Stage ii)

Stage ii) consists in a galvanostatic (e.g. chronopotentiometry) step, and can be performed by any methods known for maintaining a constant electrode current density.

Without wishing to be bound by theory, it is believed that stage ii) enables the growth of the Mg nanostructured material from the Mg nuclei obtained in stage i).

enables to nucleate the conductive support surface with magnesium.

The galvanostatic step is in particular based on chronopotentiometry.

The galvanostatic step is preferably performed at a constant current density of 75 to 150 µA/cm², in particular of about 100 µA/cm².

Stage ii) is in particular performed for 4 to 20 hours, in particular for about 10 hours.

Stage ii) is carried out in particular at a temperature of 15 to 30°C, in particular of about 20 or 25°C, preferably at the same temperature as the one of step i).

In a particular embodiment, step ii) is performed in a 3 electrode cell configuration, preferably in the same cell that the one used in step i).

In a more particular embodiment, step ii) is performed in a cell comprising a working electrode, a counter electrode and a reference electrode, the conductive support being used as the working electrode, the cell being preferably the same cell that the one used in step i).

For example, the counter electrode and a reference electrode comprise or consist of magnesium, in particular as a magnesium ribbon.

By way of example, the current density as defined above is applied to the working electrode and the counter electrode.

### Mg nanostructured material

Another subject matter of the invention relates to a Mg nanostructured material obtainable by the process as defined above.

The Mg nanostructured material may be in contact, or not, with the conductive support as defined above.

In a particular embodiment, said Mg nanostructured material comprises or is constituted of Mg nanowires. Mg nanowires are for example obtained using TBAPF₆ as electrolyte.

In a particular embodiment, said Mg nanostructured material comprises or is constituted of Mg nanoaggregates. Mg nanoaggregates are for example obtained using LiClO₄ as electrolyte.

Another subject matter of the invention relates to Mg nanowires, wherein said Mg nanowires are on a conductive support, and wherein said Mg nanowires cover at least 85% of the surface of said conductive support.

Another subject matter of the invention relates to Mg nanowires, wherein said Mg nanowires are on a conductive support, and wherein said Mg nanowires cover said conductive support with a density of 1.2 10¹⁰ to 1.8 10¹⁰ Mg nanowires per cm² of support, in particular of about 1.4 10¹⁰ nanowires by cm² of support.

The Mg nanowires as defined above have in particular a length of 1 to 10 µm, more particularly of 4 to 6 µm.

The Mg nanowires as defined above have in particular a diameter of 10 to 100 nm, more particularly of 20 to 70 nm.

The size of the nanowires, in particular their diameter and/or their length, can be measured according to conventional techniques, such as scanning electron microscopy and transmission electron microscopy.

Typically, this diameter is homogeneous over the whole of the magnesium nanowires, that is to say that a standard deviation of less than 30% is observed in the distribution of the diameters.

### Use of Mg nanostructured materials

Another subject matter of the present patent application relates to the use of a Mg nanostructured material as defined above or of Mg nanowires as defined above or of Mg nanoaggregates as defined above in the preparation of electrodes for energy storage, in particular for lithium batteries, supercapacitors or hydrogen storage.

The Mg nanostructured material, for example the Mg nanowires and the Mg nanoaggregates of the invention, advantageously make it possible to yield excellent electrochemical performance as battery anode, and in particular to obtain excellent capacity retention with excellent coulombic efficiency, in particular by virtue of their great density. Furthermore, the lithiation potential can occur below 0.2 V which contributes for a better and higher open-circuit voltage (OCV) for the full cell configuration.

The Mg nanostructured material according to the invention, in particular the Mg nanowires and the Mg nanoaggregates, are useful in particular in the preparation of anodes for lithium-metal, lithium-ion, lithium-air or lithium-sulfur batteries or other technologies of lithium or sodium batteries.

The Mg nanostructured material according to the invention, in particular the Mg nanowires and the Mg nanoaggregates, are thus useful in particular in the preparation of anodes and/or cathodes of supercapacitors, micro-supercapacitors or ultramicrocapacitors.

Another subject matter of the present patent application relates to the use of Mg nanostructured material, for example the Mg nanowires and the Mg nanoaggregates as defined above in the preparation of electrodes for electronic detectors of chemical or biological substances.

Another subject matter of the present patent application relates to the use of Mg nanostructured material, for example the Mg nanowires and the Mg nanoaggregates as defined above in the preparation of anti-microbial textiles. As other nanostructured materials made of Zn or Ag, the Mg nanostructured material of the invention, for example the Mg nanowires and the Mg nanoaggregates as defined above, may be used in textiles for its anti-microbial activity.

### Definitions

The following terms and expressions contained herein are defined as follows:
Unless otherwise indicated, all numbers expressing quantities of ingredients, properties such as size, weight, reaction conditions and so forth used in the specification and claims are to the understood as being modified in all instances by the term "about".

Accordingly, unless indicated to the contrary, the numerical parameters set forth in the following specification and attached claims are approximations that may vary depending upon the desired properties sought to be obtained by the invention. At the very least, and not as an attempt to limit the application of the doctrine of equivalents to the scope of the claims, each numerical parameter should at least be construed in light of the number of reported significant digits and by applying ordinary rounding techniques.

As used herein, the term "about" means plus or minus 10% of the numerical value of the number with which it is being used. Therefore, about 50% means in the range of 45%-55%.

As used herein, a range of values in the form "x-y" or "x to y", or "x through y", include integers x, y, and the integers therebetween. For example, the phrases "1-6", or "1 to 6" or "1 through 6" are intended to include the integers 1, 2, 3, 4, 5, and 6. Preferred embodiments include each individual integer in the range, as well as any subcombination of integers. For example, preferred integers for "1-6" can include 1, 2, 3, 4, 5, 6, 1-2, 1-3, 1-4, 1-5, 2-3, 2-4, 2-5, 2-6, etc.

By "nanostructured material" is meant a material having at least one of its dimensions within nanometric scale, in particular sized from 1 to 100 nm. The material may comprise or be constituted of nanoparticles, nanothorns, nanopillars, nanowires or nanoaggregates.

By "deposit of Mg" is meant the deposit of a material comprising or consisting of magnesium. In the first case, the Mg deposit comprises at least another compound. It may be a matter in particular of an alloy of Mg and Li, more particularly when the electrolyte is a Li containing salt.

By "Mg nanostructured material" is meant a nanostructured material comprising or consisting of magnesium. In the first case, the Mg nanostructured material comprises at least another compound. It may be a matter in particular of an alloy of Mg and Li, more particularly when the electrolyte is a Li containing salt.

"Nanowire" is understood to mean a wire, the diameter of which is less than 100 nm.

The size of the nanowires, in particular their diameter and/or their length, can be measured according to conventional techniques, such as scanning electromicroscopy and transmission electromicroscopy.

"Nanoaggregate" is understood to mean a nanomaterial resulting from the aggregation of particles of the same kind, in particular ions of the same kind, which nucleate and grow to form aggregates. Nanoaggregates of the invention are in particular cypress-leaf like Mg. Such cypress-leaf like materials are for example described in the case of Sb by Hou et al. (J. Mater. Chem. A, 2015,3, 17549-17552

By "Mg precursor" is meant any compound that enable the deposit of magnesium on a support thanks to an electrochemical method.

By "electrolyte" is in particular meant any compound that separates, once dissolved in an organic polar compound, into cations and anions.

By "potentiostatic method" is meant a method enabling a constant electrode potential to be imposed.

By "galvanostatic method" is meant a method enabling a constant electrode current density to be imposed.

By "chronoamperometry" is meant a method wherein a potential step is applied to the working electrode and its resulting current is measured as a function of time. Chronoamperometry is thus a technique where a particular potential is imposed onto the working electrode and the resulting current is monitored with respect to time.

By "chronocoulometry" is meant a method wherein a potential step is applied to the working electrode and its resulting charge is measured as a function of time. Chronocoulometry is a thus a technique where a particular potential is imposed onto the working electrode and the resulting charge is monitored with respect to time.

By "chronopotentiometry" is meant a method wherein a current pulse is applied to the working electrode and its resulting potential is measured against a reference electrode as a function of time. Such a method is for instance described by S.-I. Pyun et al., Electrochemistry of Insertion Materials for Hydrogen and Lithium, Chapter 2 Electrochemical methods. Chronopotentiometry is a thus technique where a particular current is imposed onto the working electrode and the resulting potential is monitored with respect to time.

### FIGURES

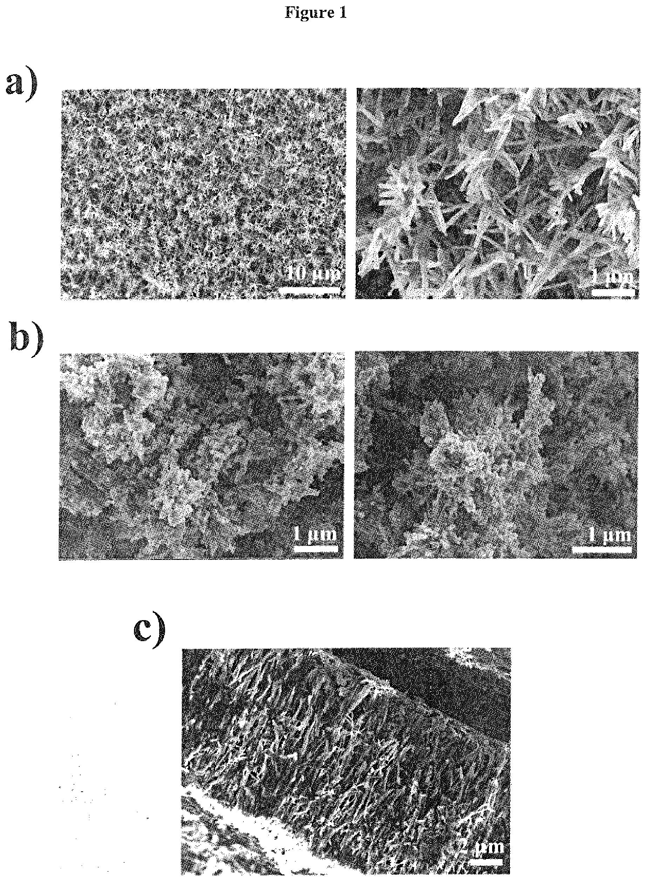

Figure 1:
   SEM images corresponding to the electrochemical deposition of Mg nanostructures on Cu substrates using a THF solution containing 0.25M PhMgBr in presence of a) 0.005 M TBAPF₆ (**figure 1a**), two different magnifications) and **b)** 0.005 M LiClO₄ (**figure 1b**), two different locations).
   **Figure 1c**): Cross-sectional view of Mg nanowires under the conditions described in **a).**
      All synthesis were carried out by using two steps, firstly chronoamperometry at - 1.24V during 2 seconds and subsequently a chronopotentiometry technique using a current density of 100 µA/cm² during 10H.
Figure 2:

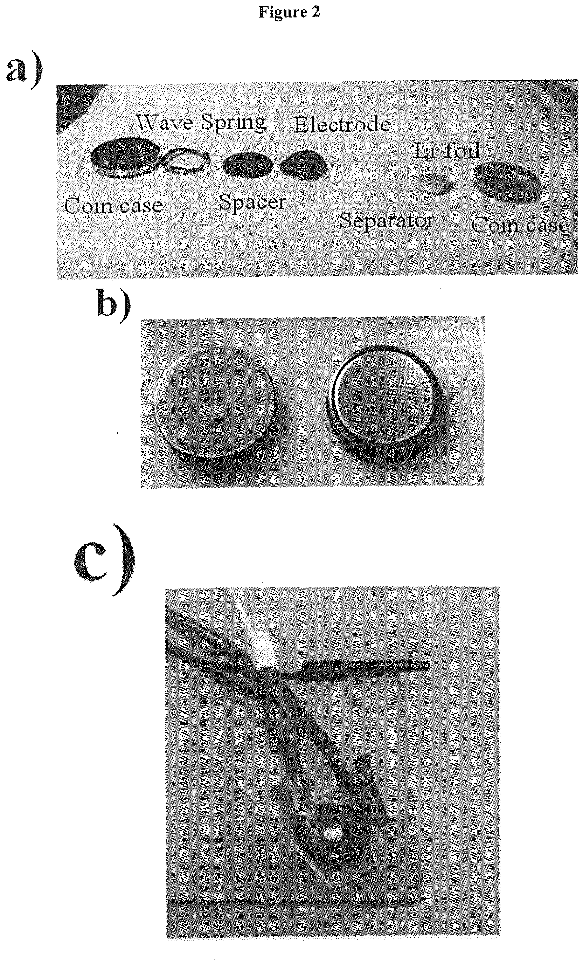

   **Figure 2a****)**: Components employed for the coin cell device configuration (example 3);
   **Figure 2b****):** Assembled cell (Front and back side); and
   **Figure 2c****):** Electrical connections using a black case for the electrochemical performances (example 3).
Figure 3:

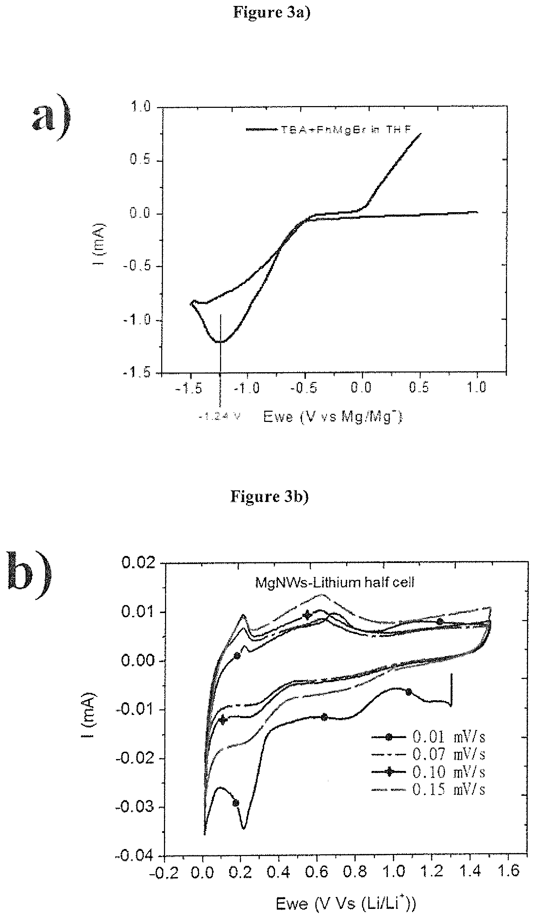

   **Figure 3a****)**: Cyclic voltammetry curve (CV) of a THF solution containing 0.25M PhMgBr salt with 0.005M TBAPF₆ using Cu foil as working electrode and Mg ribbon as counter and reference electrodes. Scan rate: 5 mVs⁻¹ (example 3);
   **Figure 3b****)**: CV curves of a LiB coin cell device using a half-cell configuration at different scan rates (example 3);

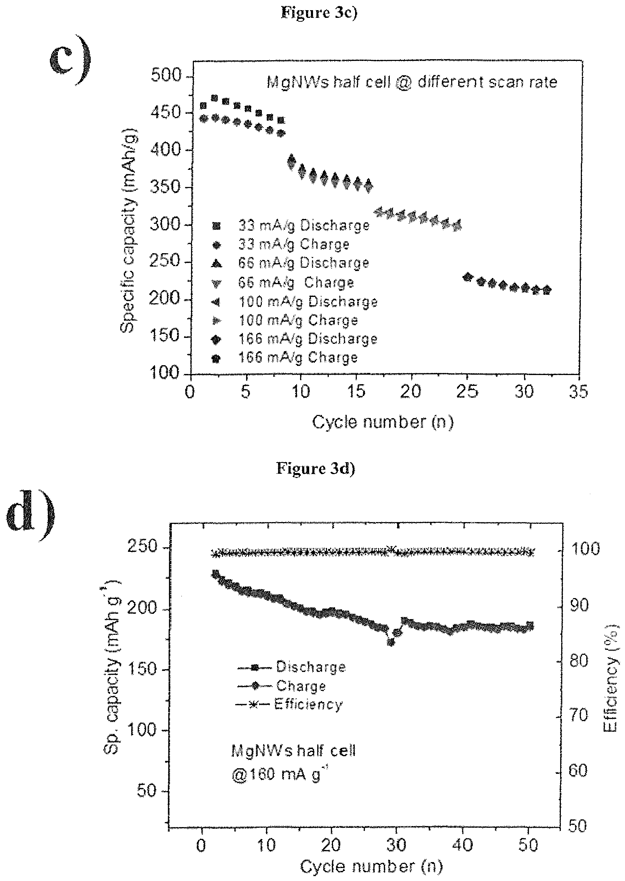

   **Figure 3c****):** Specific capacity calculated for the first seven cycles at different current densities (example 3);
   **Figure 3d****):** Specific capacity, efficiency and cycling stability of LiBs based on MgNW anodes in a half cell configuration using different current densities at 160 mA/g (example 3).

### EXAMPLES

### Materials and chemicals

3M PhMgBr (Sigma Aldrich), Mg ribbon 99.9 % (Sigma Aldrich), THF (Sigma Aldrich) and TEB-HFP (Sigma Aldrich) were used in these examples.

### Example 1: Synthesis of Mg nanowires

The electrochemical synthesis of MgNWs was conducted in a 3 electrode cell configuration at room temperature using copper foil (1 cm²) as a working electrode and Mg ribbon as counter and reference electrodes respectively. A THF solution containing 0.25M PhMgBr salt with the 0.005M TBAPF₆ was employed during the synthesis. The electrodeposition was carried out by means of a 2-step electrochemical procedure using both potentiostatic and galvanostatic methods. The former was employed to nucleate the Cu surface by applying a reduction potential of -1.24 V for a few seconds (chronoamperometry), and subsequently, the latter was used for growing the corresponding nanostructure applying a constant current of 100 µA/cm² during 10h. All the electrochemical experiments were performed in an argon-filled glove box with oxygen and water levels less than 1 ppm.

The same procedure was conducted with 0.005 M LiClO₄ instead of 0.005M the TBAPF₆, to yield a Mg nanostructured material in the form of nanoaggregates.

### Example 2: Morphological and structural characterization

The morphology of the MgNWs obtained in example 1 was analyzed by scanning electron microscopy (SEM) at an accelerating voltage of 4 kV (figure 1).

### Example 3: Electrochemical performance

The as-grown MgNWs, according to the electrochemical conditions mentioned in example 1, were evaluated as anodes in LiBs using a CR2032 coin cell in a half-cell configuration (figure 2). MgNWs deposited on Cu foil was used as anode, Li as a counter and reference electrode and a Celgard separator soaked with 1M LiPF₆ in EC:DEC (1:1) as electrolyte. The different coin cells were employed to perform cyclic voltammetry curves and galvanostatic charge-discharge cycles at different scan rates and current densities as well as to evaluate their cycling stability. All measurements were performed in an argon filled glove box with oxygen and water levels less than 1 ppm at room temperature using a multichannel VMP3 potentiostat/galvanostat with EC-Lab software (Biologic, France).

### Results

Figure 3a shows a cyclic voltammogram curve of a THF solution containing 0.25M PhMgBr with 0.005M TBAPF₆ electrolyte at a scan rate of 5 mVs⁻¹. The plot displays a pronounced reduction peak at -1.24V Vs Mg/Mg⁺ associated to the Mg deposition potential, which was employed for the electrochemical deposition of MgNWs according to the experimental conditions described in the previous section. Subsequently, the as-grown electrode was used as anode in a half-cell configuration LiB. Firstly, a characterization by CV was carried out in order to determine the different electrochemical process involved in the anode at different scan rates ranging from 0.01 mVs⁻¹ to 0.15 mVs⁻¹ at a potential window of 0.01 to -1.5V. The CV curves show two oxidation peaks at 0.2 and ∼0.7V during the anodic scan in all the scan rates. Additionally, two reduction peaks at 0.2 and 0.7V were clearly evidenced at a very low scan rate of 0.01 1-nVs⁻¹. These peaks were attributed to the different lithiation-delithiation phases. The specific capacity of the battery was calculated from galvanostatic charge-discharge cycles at different current densities as illustrated in Figure 2c. Values ranging from 229 to 460 mAhg⁻¹ were obtained from 33 to 166 mAg⁻¹ with an excellent reversible capacity retention of approximately 93%. Cycling stability is another critical factor to characterize the performance of a battery. In this study, the lifetime of the device was evaluated by applying 50 galvanostatic charge-discharge cycles at a current density of 160 mAg⁻¹ as shown in Figure 5d. Accordingly, a capacity retention of 80% with an excellent coulombic efficiency was observed during the cycling test. In overall, the results obtained in this study reflect the enormous potential of MgNWs to be employed as anodes in LiBs using a simple and low-cost process.

## Claims

1. A process for the preparation of a Mg nanostructured material, comprising the steps of:
i) submitting a conductive support to a potentiostatic step in presence of a Mg precursor and an electrolyte to obtain a deposit of Mg on said conductive support;
ii) submitting the Mg deposit on said conductive support obtained in step i) to a galvanostatic step in presence of the Mg precursor and the electrolyte, whereby the Mg nanostructured material deposited on said conductive support is obtained; and
iii) optionally, removing the conductive support and recovering the Mg nanostructured material obtained in step ii).

2. The process according to 1, wherein the conductive support is a metal or alloy, in particular a metal or alloy selected from the group constituted of Cu, steel, in particular stainless steel, and Al.

3. The process according to anyone of claims 1 to 2, wherein the electrolyte is chosen from TBAPF₆ and LiClO₄.

4. The process according to anyone of claims 1 to 3, wherein the Mg precursor is a Grignard reagent, said Grignard reagent being in particular PhMgBr.

5. The process according to anyone of claims 1 to 4, wherein the potentiostatic step is based on chronoamperometry or chronocoulometry, in particular on chronoamperometry at reduction potentials.

6. The process according to claim 5, wherein the potentiostatic step is performed:
- at a reduction potential of +0.5 to -1.5 V, in particular of -1.0 to -1.5 V, more particularly of about -1.24 V; and/or
- for 1 to 10 seconds, in particular for 2 to 8 seconds, more particularly for about 5 seconds.

7. The process according to anyone of claims 1 to 6, wherein the galvanostatic step is based on chronopotentiometry.

8. The process according to claim 7, wherein the galvanostatic step is performed:
- at a constant current density of 75 to 150 µA/cm², in particular of about 100 µA/cm²; and/or
- for 4 to 20 hours, in particular for about 10 hours.

9. The process according to anyone of claims 1 to 8, wherein step i) and/or step ii) are performed at a temperature of 15 to 30°C, in particular of about 20 or 25°C.

10. The process according to anyone of claims 1 to 9, wherein step i) and/or step ii) are performed in a 3 electrode cell configuration, in particular in a cell comprising a working electrode, a counter electrode and a reference electrode, the conductive support being used as the working electrode.

11. Mg nanostructured material obtainable by the process according to anyone of claims 1 to 10, in particular said Mg nanostructured material comprising or being constituted of Mg nanowires.

12. Mg nanowires, wherein said Mg nanowires are on a conductive support, and wherein said Mg nanowires cover at least 85% of the surface of said conductive support.

13. Mg nanowires, wherein said Mg nanowires are on a conductive support, and wherein said Mg nanowires cover said conductive support with a density of 1.2 10¹⁰ to 1.8 10¹⁰ Mg nanowires per cm² of support, in particular of about 1.4 10¹⁰ nanowires by cm² of support.

14. Mg nanowires according to anyone of claims 11 to 13, wherein said Mg nanowires have:
- a length of 1 to 10 µm, in particular of 4 to 6 µm; and/or
- a diameter of 10 to 100 nm, in particular of 20 to 70 nm.

15. The use of a Mg nanostructured material according to claim 11 or of Mg nanowires according to anyone of claims 12 to 14:
- for energy storage, in particular in the preparation of electrodes for lithium batteries, supercapacitors or hydrogen storage; or
- in the preparation of electrodes for electronic detectors of chemical or biological substances; or
- in the preparation of anti-microbial textiles.
